# EUROPEAN PATENT APPLICATION

(11) **EP 0 952 178 A1**
(43) Date of publication of application: **27.10.1999**
(21) Application number: 99113353.9
(22) Date of filing: 14.06.1993
(51) Int. Cl.: C08J 11/28, C08J 11/22, C08G 18/83, C08G 65/26

(54) **Process for conversion of polyurethane polymer to polyol and fresh polyurethane polymer therefrom**

(30) Priority: 15.06.1992 US 898870
(62) Divisional of application: 93915345.8
(71) Applicant: THE DOW CHEMICAL COMPANY, Midland, Michigan 48674 (US)
(72) Inventor: Van der Wal, Hanno Rudolf, 4542 BP Hoek (NL)
(74) Representative: Huber, Bernhard, Dipl.-Chem.

(57) **Abstract**

An intermediate product suitable for the preparation of a polyether polyol is obtainable by treating polyether polyol-based scrap polyurethane at an elevated temperature with a liquid mixture which consists of an alkanolamine and a metal hydroxide wherein the weight ratio of scrap polyurethane to liquid mixture is from 12:1 to 50:1 and the liquid mixture contains the alkanolamine in an amount of from 70 to 95% based on total weight of the liquid mixture wherein the said intermediate is a stable emulsion or dispersion.

## Description

This invention relates to an intermediate product for the preparation of a polyether polyol.

The extensive industrial use of polyurethane polymer and the production thereof is accompanied by a considerable accumulation of waste or scrap polyurethane polymer which may be disposed of by incineration or landfill. However such disposal, besides not giving full consideration to the environment, is a permanent loss of costly materials. It is therefore of interest to consider the recovery and eventual reuse of such materials.

Procedures for recovering the polyurethane raw materials from scrap polyurethane polymer are known in the art. U.S. Patent 2,937,151 discloses dissolving flexible polyurethane foams in liquid polyalkylene giycol ethers, polyester or polyesteramides. U.S. Patent 3,632,530 discloses decomposition of a polyurethane by heating in the presence of an aliphatic diol such as ethylene glycol or dipropylene glycol. However, in practice, methods for recovering scrap polyurethane based on degradation of the foams in the presence only of alcohol groups are excessively time consuming, even in the presence of catalysts, such as taught in U.S. Patent 3,300,417. An increased rate of dissolution of the scrap polyurethane by the use of primary amines in place of alcohols is taught in U.S. Patent 3,117,940. U.S. Patent 3,708,440 discloses the dissolution of rigid isocyanurate foam in a mixture of diethylene glycol and diethanolamine. U.S. Patent 3,404,103 discloses decomposing polyurethane in an aliphatic amine, e.g. monoethanolamine, in the presence of an alkali metal oxide or alkali metal hydroxide, such as sodium hydroxide, to obtain an amine derivative and a polyether; separating the polyether from the amine derivative and reemploying the polyether for production of urethane polymer.

All of the procedures noted above yield a mixture of polyols, aromatic and aliphatic ureas, and aromatic and aliphatic amines, and occasionally some soluble urethane fragments. Such mixtures, as obtained according to the above noted procedures, frequently undergo phase separation into a polyol component having a low density and viscosity, and an amine component having a higher density and viscosity. Such two phase mixtures besides being more difficult to handle must always be well mixed before they can be used in any subsequent application or else there is little or no reproducibility and consistency of results. The susceptibility of the recovered material to phase separation becomes greater as the amount of scrap polymer to be treated per unit volume solvent increases. Additionally, the presence of amine is generally undesirable when using recovered material to prepare a fresh polyurethane polymer as it may enhance the reactivity of the system to such an extent that only poor quality polymer articles may result. Accordingly it is generally required that such amine content be removed from the mixture. Suitable techniques for the removal of the amine component include, for example, distillation procedures such as disclosed in U.S. Patents 3,404,103; 4,316,992; 4,317,939 and 4,399,236. However, separation of polyol and amine components is undesirable due to additional energy and labor costs.

As an alternative to removing the amine component from the mixture, the complete mixture may be further treated with an alkylene oxide. Such treatment as disclosed in, for example, U.S. Patents 3,738,946 and 4,110,266 converts the amine functionality to less reactive hydroxyl functionality, thus facilitating the reuse of such material in the preparation of fresh polyurethane polymer.

Despite the seemingly extensive disclosure of recovery/recycling procedures for waste or scrap polyurethane polymer there still remains a need to provide a process which provides a more useful recovered material and is economically advantageous to operate. Particularly it is desirable to provide a process which allows, in a relatively shorter period of time, the recycling of large volumes of scrap material. It is further desirable that such process provide for an intermediate product that may be appropriately treated to give an end product which is substantially free of any hydrogen-bearing nitrogen atoms.

It is now found that the above mentioned deficiencies can be substantially overcome according to the invention as defined hereinafter.

This invention relates to an intermediate product suitable for the preparation of a polyether polyol obtainable by treating polyether polyol-based scrap polyurethane at an elevated temperature with a liquid mixture which consists of an alkanolamine and a metal hydroxide wherein the weight ratio of scrap polyurethane to liquid mixture is from 12:1 to 50:1 and the liquid mixture contains the alkanolamine in from 70 to 95 percent based on total weight of the liquid mixture characterized in that the intermediate is a stable emulsion or dispersion.

This invention provides a means of efficiently recovering reusable material from polyurethane polymer in the from of a polyol and subsequently using this to prepare fresh polyurethane polymer. Applicant has found that through the use of the selected liquid mixture that a surprisingly high recycle ratio of waste polyurethane polymer to liquid mixture may be obtained. Even more surprising is that, Applicants recovery process provides a stable, homogeneous, intermediate not particularly susceptible to phase separation. A stable intermediate provides the advantage of consistency of end product and better control of any activity in which the intermediate product may subsequently be used. Additionally, Applicants have found that selection of ethylene oxide or propylene oxide provides for control over any phase separation that may exhibited by the end alkoxylation product. Use of propylene oxide minimizes or overcomes the tendency of the end product to exhibit phase separation. Further, Applicant has found that when such polyol is used to manufacture fresh, flexible, polyurethane polymer frequently equivalent or better physical properties, notably compression load deflection, of the resulting polymer are observed at lower isocyanate reaction indices. The ability to operate at a lower reaction index means that less "virgin" material is required to prepare the polymer with favorable economic and environment consequences.

The scrap or waste polyurethane polymer to be subjected to the recovery process are generally produced by reaction of polyisocyanates, particularly diisocyanates with polyether polyols. General procedures for reacting a polyisocyanate with an isocyanate-reactive substance are well known in the art and further detailed description thereof is believed unnecessary for the purpose of defining this invention. A wide variety of organic diisocyanates can be used, among which are included aromatic diisocyanates, such as m-phenylene diisocyanate, p-phenylene diisocyanate, 4-t-butyl-m-phenylene diisocyanate, 4-methoxy-m-phenylene diisocyanate, 4-phenoxy-m-phenylene diisocyanate, 4-chloro-m-phenylene diisocyanate, toluene diisocyanates (either as a mixture of isomers, e.g., the commercially available mixture of 80 percent 2,4-toluene diisocyanate and 20 percent 2,6-toluene diisocyanate, or as the individual isomers themselves), and polyphenyl polymethylene polyisocyanate. The process of this invention if found to be particularly suitable for treating scrap or waste polyurethane polymer obtained from the reaction of an aromatic polyisocyanate including toluene diisocyanate and especially methylene diphenylisocyanate or isocyanate-terminated adducts thereof.

Illustrative of polyether polyols from which the scrap or waste polyurethane are obtainable include polyalkylene ether polyols containing two or more reactive hydroxyl groups, such as diols, triols and tetrols. Such polyether polyols are obtainable by reacting initiators such as glycerol, trimethylolpropane, pentaerythritol, sucrose, sorbitol, dipentaerythritol, or amines such as ethanolamine, ethylene diamine, diethylene triamine, with lower alkylene oxides including ethylene oxide, propylene oxide. To enhance the efficiency of the recovery process and obtain an intermediate product which is not prone to solidification it is preferred, for this invention, to subject scrap polyurethane polymer to the recovery process where such polymer has been obtained by reaction of a polyoxyalkylene or polyether polyol which has a molecular weight of from 1000 to 10000, preferably from 2000 to 8000 and more preferably from 3000 to 7000.

This invention is found to be particularly suited to the treatment of polyether polyol-based polyurethane scrap especially such scrap as may be generated by flexible foam production or RIM and elastomeric polyurethane polymers. Whilst polyester polyol-based polyurethane scrap also may be treated in a like manner it is observed that the intermediate product is not stable as evidenced by increasing viscosity with time. Like treatment of scrap polyurethane polymer from rigid foam production frequently results in a glass-like solid which can not be conveniently further processed.

According to this invention, polyurethane scrap is treated at an elevated temperature, typically from 70°C to 200°C, preferably from 80°C to 150°C, with a liquid mixture which consists of an amine, particularly an alkanolamine, and a metal hydroxide to provide an intermediate product. The weight ratio of scrap polyurethane polymer to liquid mixture is from at least 12:1 and up to 50:1, preferably from 15:1 to 50:1, and more preferably from 15:1 to 30:1. Applicants have found that use of such a high weight ratio results in a stable intermediate which is not susceptible to phase separation. Use of a smaller ratio is observed by Applicants to result in a phase separation.

The liquid mixture contains the alkanolamine in an amount of from 70 to 95, preferably from 85 to 95 percent by weight. The balance, from 5 to 25, preferably from 5 to 15 weight percent being made up by the presence of the metal hydroxide. Examples of alkanolamines which can be employed include ethanolamine, N-methylethanolamine, diethanolamine, triethanolamine, propanolamine, dipropanolamine. Especially preferred is diethanolamine which is conveniently handled and provides for significantly shorter process times over other alkanolamines. Pure diethanolamine is a solid at room temperature and therefore it is convenient to use commercial grades of diethanolamine which are aqueous solutions containing water in up to 20 weight percent. The presence of water during the treatment of the scrap polyurethane polymer is observed to favorably reduce the time required to obtain the intermediate product. Advantageously, an amount of water up to 20, preferably up to 10 weight percent based on total weight of liquid mixture may be present. While alkanolamines are specified it is also contemplated that other liquid or low melting point amine substances such as alkylene polyamines including, for example, ethylene diamine will operate in the process of this invention. Examples of metal hydroxide include the Periodic Group I and II metal hydroxides and mixtures thereof and especially the preferred Group I metal hydroxides such as lithium hydroxide, sodium hydroxide and potassium hydroxide. While hydroxides are specified it is also contemplated that other substances of like basicity including the oxides, alkoxides, phenoxides and thiophenoxides of the same metals will operate equally well in the process of this invention.

The liquid mixture is prepared by combining the alkanolamine and metal hydroxide. Advantageously, to assist in the preparation of the liquid mixture the metal hydroxide may be added to the alkanolamine as an aqueous solution. The water present may be removed by a suitable procedure however it is found advantageous to have the water remain for reasons already mentioned. Once prepared the liquid mixture is brought to the desired temperature, the scrap polyurethane polymer preferably in a comminuted form is then added to the liquid mixture. The polyurethane polymer added to the mixture may be added in one or more increments. The resulting blend is then stirred until an intermediate is obtained. The intermediate may be an emulsion or a dispersion. The time required for this varies to an extent on the nature of the polyurethane and the quantity and size of the pieces of polymer being added, but typically times of from 10 minutes to 12 hours are generally sufficient to obtain such an intermediate. The intermediate may be stored or directly reacted with an alkylene oxide to provide a polyol suitable for use in the manufacture of fresh polyurethane foam.

The intermediate contains polyols, ureas, both aliphatic and aromatic, aliphatic and aromatic amines, which can include primary and/or secondary amines and may also contain some soluble urethane fragments or suspended solid polyurethane fragments. The amines present in the intermediate can be essentially primary amines but frequently can be a mixture of both primary and secondary amines, depending on the polyurethane polymer subjected to the recovery process. Examples of such amines include methylene diphenylamine, diaminotoluene and ethanolamine. The intermediate can contain, in total, from 2 to 90, more typically from 2 to 30 weight percent amines containing isocyanate reactive hydrogen atoms. Such amines will be notably methylene diphenylamine and toluene diamine present as a consequence of the scrap polyurethane polymer being prepared respectively from methylene diphenylisocyanate or toluene diisocyanate. As already mentioned, the presence of such amines containing primary and/or secondary amine groups, when preparing fresh polyurethane polymer, is frequently undesirable because of the higher reactivity of such amine groups toward isocyanates as compared to hydroxyl groups with isocyanate.

The undesirable primary/secondary amine groups present in the intermediate product can be removed by treating the intermediate product with an alkylene oxide comprising propylene or ethylene oxide. Suitable additional alkylene oxides to propylene or ethylene oxide include, for example, butylene oxide, pentylene oxide, nexylene oxide, styrene oxide, epichlorohydrin, trichlorobutylene oxide, glycidol and 2,2'-bis(4-(1,2-epoxypropylphenoxy)-propane. The amount of alkylene oxide employed is preferably in excess of the amount required to convert all of the amine present in the intermediate product to polyol. That is, an excess of alkylene oxide is employed with respect to active hydrogen atom of the amine present. Thus, more than one mole of alkylene oxide is employed per mole of active hydrogen atom of the amines. In preferred practice, more than 2 and up to 20 moles of alkylene oxide is employed per mole of active hydrogen atom of the amines present. The end, alkoxylation, product or polyol can be characterized in that advantageously it has an average hydroxyl number of from 30 to 200, preferably from 50 to 180.

Applicants have found that when an intermediate is reacted with ethylene oxide separation of the alkoxylation product into two liquid phases generally results. In contrast, when an intermediate is reacted with propylene oxide a single phase product is obtained. Such a means of controlling phase separation in the polyol end product can be used to advantage to help obtain products particularly suited to different end applications.

Applicants nave found that to eliminate or minimize the possibility of any phase separation occurring during the alkoxylation procedure that it is necessary for the alkylene oxide to comprise propylene oxide, advantageously the alkylene oxide comprises propylene oxide in from at least 25, preferably from 40 and more preferably from 60 weight percent and up to 100 percent of the total alkylene oxide being reacted with the intermediate product. When not composed in its entirety by propylene oxide, the alkylene oxide additionally can comprise one or more other alkylene oxides especially including ethylene oxide, butylene oxide, glycidol and 2,2'-bis(4-(1,2-epoxypropylphenoxy)-propane. When the final polyol is obtained by the reaction of mixtures of propylene oxide including other oxides, such mixture may be introduced directly into the reaction or sequentially as individual components. In the latter case it is preferred that the first oxide introduced is at least a part or all of propylene oxide intended to be present in the end product. The amount of propylene oxide first introduced should be sufficient to prevent the occurrence of phase separation when a second oxide, notably for example ethylene oxide, is introduced. This first amount of propylene oxide needs to be determined experimentally as it is dependent on the nature of the scrap polyurethane polymer subject to the recovery process. From Applicants own observation it is frequently observed that a suitable first amount of propylene oxide required for this purpose typically is from at least 25, and preferably from at least 50 parts per 100 parts by weight of intermediate product.

In contrast, alkoxylation with predominantly ethylene oxide results in a product having two, readily separable, liquid polyol phases. The upper phase is found to be essentially an amine free, polyether polyol suitable for use in a flexible polyurethane foaming process. The lower phase contains the alkoxylated amine adducts and is found to be suitable for use in rigid polyurethane foaming processes. The lower phase has a high aromatic content, due to the alkoxylated amines, permitting it to be used as substitute for aromatic polyols frequently used to modify the combustion behavior of rigid polyurethane foam.

The reaction of the intermediate and alkylene oxide is carried out under autogenous pressure which can range from 25 to 200 psi (173 to 1386 kPa), usually between 25 and 100 psi (173 and 693 kPa). Temperature of the alkoxylation reaction can range from 80°C to 150°C, preferably between 100°C and 130°C; and the time of reaction can range from as little as 20 minutes to 24 hours, usually from 1 to 6 hours depending on total amount of alkylene oxide to be reacted. Addition of an alkoxylation catalyst is optional but frequently not necessary due to the already present metal hydroxide which can function in this capacity.

The recovered scrap polyether polyol-based polyurethane polymer in the form of a polyol is suitable for preparing fresh polyurethane polymer by reacting it with a polyisocyanate. The so obtained polyol is also suitable for the preparation of isocyanate-terminated prepolymers for subsequent use to give fresh polyurethane polymer. Preferred isocyanates for preparing prepolymer include 2,4'-, 4.4'-methylene diphenylisocyanate, 2,4- and 2,6-toluene diisocyanate. When preparing the prepolymer the ratio of isocyanate to polyol is such to provide a prepolymer that advantageously has an isocyanate content of, when an adduct of a methylene diphenylisocyanate, from 3 to 30, preferably from 6 to 30, and more preferably from 8 to 27 weight percent; and when a toluene diisocyanate adduct of from 15 to 48 and preferably from 20 to 45 weight percent.

The recovered polyurethane polymer in the form of a polyol can be employed as the entire polyol reactant for reaction with polyisocyanate to produce fresh polyurethane polymer, or such product can be present as a component in a polyol composition to be reacted with the polyisocyanate. When present as a component of a polyol composition, such composition comprises from 1 to 99, preferably from 5 to 50, more preferably from 10 to 45 weight percent of its total weight of recovered scrap polyether polyol-based polyurethane polymer in the form of a polyol. The recovered polyurethane polymer in the form of a polyol or composition containing such is caused to react with suitable polyisocyanates including 2,4- and 2,6-toluene diisocyanates, 2,4'- or 4,4'-methylene diphenylisocyanate, or polyphenyl polymethylene polyisocyanate. Generally the amount of polyisocyanate present will be such to provide an average of from at least 0.5 isocyanate group per isocyanate reactive hydrogen atom of said polyol or polyol composition. When preparing rigid polyurethane polymer preferably the polyisocyanate is present in an amount to provide from 0.5 to 3, more preferably from 0.8 to 2, and most preferably from 0.9 to 1.7 isocyanate group per isocyanate reactive hydrogen atom. When preparing flexible polyurethane polymer preferably the polyisocyanate is present in an amount to provide from 0.5 to 1.1, more preferably from 0.6 to 0.95 isocyanate group per isocyanate reactive hydrogen atom. Other conventional polyurethane processing components which optionally, but advantageously, are present include urethane promoting catalysts, surfactants and depending on the type of polymer to be produced foaming agents including especially water.

Polyurethane polymers, when flexible foam, prepared from the recovered scrap polyether polyol-based polyurethane polymer in the form of a polyol are suitable for many applications including upholstery, and sound insulation. When such polyurethane polymers are rigid foam they are of value in construction and appliance application areas.

The following examples are presented to illustrate the invention. The scope of the invention is not to be considered limited to such examples. Unless otherwise mentioned all quantities identified are parts by weight.

The scrap polyurethane foams subjected to the recovery process are identified as follows:

### Scrap Foam A

A Cold molded MDI-based flexible polyurethane foam obtainable according to the given formulation:
- 100 parts by weight: VORANOL CP 6001 a 6000 molecular weight polyoxypropylene-oxyethylene triol available from The Dow Chemical Company;
- 3.75: Water;
- 0.8: DABCO 33LV, a proprietary amine catalyst available from Air Products;
- 0.15: NIAX A1, a proprietary amine catalyst available from Union Carbide;
- 0.8: a silicon-based surfactant, TEGOSTAB B4113 available from Th.Goldschmidt AG;
- Index 100: SPECFLEX NF253, a proprietary MDI-based isocyanate composition with NCO content of 29%, available from The Dow Chemical Company.

### Scrap Foam B

A flexible polyurethane slabstock foam obtainable according to the given formulation:
- 100 parts by weight: VORANOL CP 3322 a 3000 molecular weight polyoxypropylene-oxyethylene triol available from The Dow Chemical Company;
- 2.8: Water;
- 0.8: dimethylethanolamine (DMEA);
- 0.1: NIAX A1, a proprietary amine catalyst available from Air Products;
- 0.7: a silicon-based surfactant, TEGOSTAB B2370 available from Th.Goldschmidt AG;
- 0.22: tin octoate;
- Index 105: Toluene diisocyanate, 80% 2,4-isomer, 20% 2,6-isomer.

### Example 1

Intermediate products 1 to 4 and Comparative Intermediates A to D are obtained according to the hereinafter general procedure. Specific materials, quantities and conditions are given in Table I.

The liquid mixture is prepared from the mentioned materials and brought to the indicated elevated temperature. Comminuted scrap polyurethane foam is added to the liquid mixture, over a period of from 15 to 720 minutes, in an amount to provide a final weight ratio of foam to liquid mixture as given. The so obtained mixture is maintained, with stirring, at the elevated temperature, for a further 30 to 240 minutes to ensure complete treatment of the scrap foam. Properties of the resulting intermediate product are also indicated in Table I. Where reported, the methylene diamine(MDA) or toluene diamine(TDA) content is observed with reverse phase high pressure liquid chromatography using a U.V. detector at 254nm. The mobile phase is a 50:50 methanol:water mixture operated with a C18 stationary phase.

While Comparative Intermediate C is observed as being a stable intermediate, its preparation takes significantly longer even at a higher process temperature in comparison to when using an alkanolamine. The necessity of using higher temperatures results in a undesirable color of the intermediate product. Further as remarked later, Comparative Intermediate C is not see to provide for the same advantageous physical properties of polyurethane foam prepared therefrom.

**Table I**

| Preparation and Properties of Intermediate Product. | | | | | | | |
|---|---|---|---|---|---|---|---|
| Intermediate | 1 | 2 | 3 | A* | B* | C* | D* |
| Liquid Mixture: (pbw) | | | | | | | |
| Diethanolamine ① | 25 | 25 | 203 | 100 | 50 | / | 25 |
| Diethylene glycol | / | / | / | / | / | 25 | / |
| Potassium Hydroxide ② | 5 | 5 | 40 | 20 | 10 | 5 | 5 |
| Temperature (C) | 150 | 170 | 150 | 150 | 150 | 180 | 170 |
| Scrap Foam - Type (pbw) | A | B | A | A | A | A | B |
| | 350 | 400 | 6095 | 100 | 300 | 350 | 250 |
| Addition time (mins.) | 300 | / | 720 | 30 | 120 | / | / |
| Weight Ratio Foam:Liquid Mixture | 14:1 | 16:1 | 30:1 | 1:1 | 6:1 | 16:1 | 10:1 |
| Post treatment time (minutes) | 60 | 90 | / | 90 | 90 | 90 | 90 |

| Intermediate Product | | | | | | | |
|---|---|---|---|---|---|---|---|
| MDA% | n.o. | / | 3.2 | n.o. | n.o. | 3.6 | / |
| TDA% | / | 5.47 | / | / | / | / | n.o. |
| Viscosity ③ at 25°C | 36000 | n.o. | 43000 | 13000 | 18000 | n.o. | n.o. |
| Stability: Separation (after 24 hr at 60°C) | no | no | no | yes | yes | no | yes |

| | | | | | | | |
|---|---|---|---|---|---|---|---|
| * Not an example of this invention | | | | | | | |
| ① Commercial grade containing 10 weight percent water | | | | | | | |
| ② Added as an aqueous solution, 50 weight percent | | | | | | | |
| ③ Viscosity measured with cone/plate Contraves Rheomat 135 at 1 rpm with cone CP₉. | | | | | | | |
| n.o. not observed | | | | | | | |

### Example 2: Alkoxylation of Intermediate Product

Intermediate products of Example 1 are reacted with alkylene oxide, in the absence of alkoxylation catalyst, to provide a polyol. The alkoxylation reaction is conducted at a temperature of from 100°C to 120°C in a closed reaction vessel. The alkylene oxide is added at such a rate to maintain a pressure of from 29 to 73 psi(200 to 506 kPa) until the desired amount is fed. The reacting mixture is then maintained at the same temperature until all oxide is reacted. This can be seen by monitoring the change of pressure with time. When the pressure is seen to be remain constant then reaction of intermediate product with alkylene oxide is considered to be completed. The so obtained crude polyol containing a metal hydroxide content is treated with a 10 percent mole excess, based on hydroxide content, of dodecyibenzene sulphonic acid (DBSA) to provide a finished polyol. Table II indicates which intermediates products are reacted with which oxides to provide Polyols 4 to 11.

From Polyols 6 and 7 it is observed that attempting to prepare final polyol having a hydroxyl number of greater than 200 leads to a product which is of high viscosity, susceptible to solid sedimentation. Considering Polyols 8 to 10, the influence of ethylene oxide and the observation of phase separation is noted.

Hydroxyl Number of the resulting polyol is determined in accordance with test procedure ASTM D-4274(c); viscosity is determined using a Brookfield Spindle 4 at 12 rpm.

**Table II**

| Polyol | 4 | 5 | 6 | 7 | 8 | 9 | 10 | 11 |
|---|---|---|---|---|---|---|---|---|
| Intermediate Product Example /pbw | 3/ 1965 | 3/ 1965 | 3/ 1965 | 3/ 1965 | 3/ 1883 | 3/ 1883 | 3/ 1883 | 3/ 1883 |
| Propylene Oxide (pbw) | 1694 | 676 | 399 | 100 | / | / | / | / |
| Ethylene Oxide (pbw) | / | / | / | / | 102 | 337 | 638 | 1553 |
| Wt % PO on end polyol | 46.3 | 25.6 | 14.7 | 4.8 | / | / | / | / |
| Wt % EO on end polyol | / | / | / | / | 5.1 | 15.2 | 25.3 | 45.2 |
| Wt % unreacted MDA present in end polyol | 0.06 | 0.3 | 0.8 | 1.4 | 1.66 | 0.43 | 0.10 | 0.02 |
| Hydroxyl Number | 157 | 183 | 232 | 266 | n.o. | n.o. | n.o. | n.o. |
| Viscosity at 25°C | 4950 | 8000 | 32500 | 57000 | n.o. | n.o. | n.o. | n.o. |
| Appearance | uniform liquid phase | uniform liquid phase | liquid phase + solids sedimentation | liquid phase + solids sedimentation | two distinct liquid phases | two distinct liquid phases | two distinct liquid phases | two distinct liquid phases |

### Example 3

Polyols 12 and 13 are prepared from Intermediate 3.

| Step | | Polyol 12 | Polyol 13 |
|---|---|---|---|
| | Intermediate 3 | 4412 | 2047 |
| | 50% aqueous KOH | 63.1 | 12.2 |
| 1 | Remove water to less than 0.1% | | |
| 2a | Propylene oxide feed at 115°C | 9481 | 1433 |
| 2b | Ethylene oxide feed at 120°C | / | 614 |
| 3 | 50% aqueous KOH | 41.2 | 23.1 |
| 4 | Remove water to less than 0.1% | | |
| 4a | Propylene oxide feed at 115°C | / | 2870 |
| 4b | Ethylene oxide feed at 120°C | 1894 | 1812 |
| 5 | Acid neutralized | | |
| | Polyol viscosity | 4760 | 2200 |
| | Hydroxyl number | 89 | 79 |
| | Total PO content of polyol | 60% | 49% |
| | Total EO content of polyol | 12% | 28% |
| | Total "scrap polyurethane" content of polyol | 26% | 23% |

The general procedure is as employed for the preparation of Polyols 4 to 11. However, in this case the alkoxylation reaction is catalyzed by the further addition of potassium hydroxide. The amounts of material used, parts by weight, and the sequential procedure employed is given above in Table III.

### Example 4

Expanded polyurethane polymer, Foams 1 to 8 and Comparative Foams A to C, are prepared from polyol obtained according to this invention. The formulations are given in Table IV along with some of the physical properties of the resulting foam. The isocyanate used to prepare the polyurethane foam in these examples is SPECFLEX NF253 as defined earlier. Where reported, foam properties are measured according to the following test procedures: Compressive Load Deflection (CLD), hysteresis, SAG factor(CLD65%/CLD25%) - DIN 53577; elongation - DIN 53571; resilience -ASTM D-5374, test H(1986).

Review of the compressive load deflection (CLD) performance indicates that foam may be prepared according to this invention at a lower isocyanate than for conventional foam when using polyols obtained from polyurethane polymer. When such polyol is present in 40 weight percent of the polyol formulation used to prepare the foam; the CLD performance of foam prepared at an isocyanate reaction index of 70 is similar to that of a foam prepared in the absence of such polyol and at an isocyanate reaction index of 90. The surprising equivalence of CLD performance at lower isocyanate index provides for a reduced consumption of costly polyisocyanate. This reduced consumption can be of the order of from 10 to 20 weight percent.

The SAG factor is the ratio of CLD at 65 percent:CLD at 25 percent. A higher SAG factor is indicative of a greater degree of support and sitting comfort of polyurethane foam as might be used for cushioning and upholstery applications. Foams prepared according to this invention display an unexpectedly high SAG factor.

The enhanced performance of polyurethane foams obtained according to this invention while not fully understood is thought to be as a consequence of selecting an alkanolamine in the process of recovering scrap polyurethane polymer as a polyol. Foam prepared from recovered polyurethane scrap in the form of a polyol obtained by treatment with diethylene glycol, in contrast to alkanolamine, does not provide for the same advantageous enhancement in physical properties of the resulting foam.

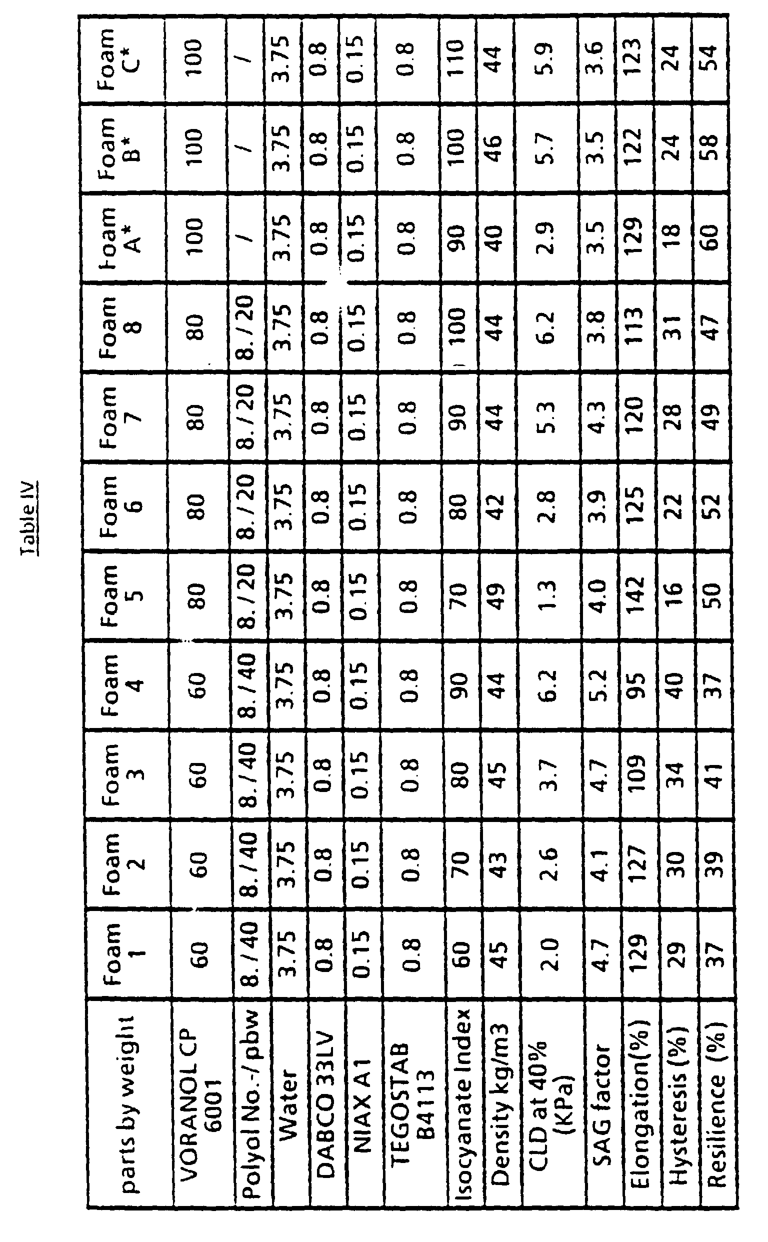

### Example 5

In this example, polyol obtained according to the invention is used to prepare fresh polyurethane foam suitable for use in a sound insulation application (Foam 9) and elastomer application (Foam 10).

**Table V**

| parts by weight | Foam 9 | Foam 10 |
|---|---|---|
| VORANOL CP 6001 | 50 | / |
| Ethylene glycol | / | 22.5 |
| Polyol No./ pbw | 13./ 50 | 7./ 120 |
| Water | 3.75 | 0.6 |
| DABCO 33LV | 0.8 | 0.8 |
| NIAX A1 | 0.15 | / |
| TEGOSTAB B4113 | 0.8 | 0.8 |
| Isocyanate Type | SPECFLEX NF253 | VORANATE M220 |
| Isocyanate Index | 100 | 108 |
| Density kg/m3 | 36.0 | 636 |
| CLD at 40% (KPa) | 7.3 | / |
| SAG factor | 4.8 | / |
| Elongation(%) | / | / |
| Hysteresis (%) | 49 | / |
| Resilience (%) | 24 | / |

Foam 9 shows that polyol obtained according to this invention is particularly of value to prepare foams with high hysteresis and low resilience which is required for sound and mechanical dampening applications.

Foam 10 demonstrates the use of large quantities of recycle polyol in a low density RIM application.

### Example 6

In this example, polyol obtained according to the invention is used to prepare a urethane-modified isocyanate composition. The composition is obtained by reacting 51 parts by weight of Polyol 12 with 100 parts by weight of a methylene diphenylisocyanate mixture containing the 4,4'-isomer and the 2,4'-isomer in a 50:50 weight ratio. The resulting isocyanate composition is observed to have an isocyanate content of 19.2 percent and a viscosity of 1250 cps at 25°C.

The so obtained isocyanate composition is observed to exhibit good storage stability with no solidification or crystal deposition occurring after 4 weeks at room temperature. Observation of such storage stability is in itself surprising as Polyol 12 was treated with an acid, dodecylbenzene sulphonic acid to provide the finished polyol. Normally to obtain urethane-modified isocyanate compositions which exhibit good storage stability it is necessary to use polyol which does not have a salt content such as resulting from *in situ* treatment of the basic alkoxylation catalyst with an acid. The presence of salts such as, for example, potassium acetate promotes instability of modified isocyanate compositions.

### Example 7

An intermediate product is obtained by treating, at 150°C, Scrap Foam A with a liquid mixture consisting of 90 weight percent diethanolamine and 10 weight percent potassium hydroxide in accordance with the general procedure given in Example 1. The weight ratio of scrap foam to liquid mixture is 25:1. The resulting intermediate is then divided into three portions and each portion reacted with different amounts of ethylene oxide in accordance with the general procedure given in Example 2. The resulting end products, Polyols 14, 15 and 16 containing respectively 40, 45 and 50 weight percent ethylene oxide, all under go phase separation to give a lighter colored top layer and a darker colored bottom layer. Polyol 16, with the greatest ethylene oxide content is observed to be the quickest to display phase separation. All top and bottom layers were separated and subjected to SEC analysis with reference to the starting materials used in the preparation of Scrap Foam A. The analysis indicated that, in all cases, the top layer is essentially recovered VORANOL CP 6001 in a purity of 90 percent or more, the remaining balance is observed to comprise partially ethoxylated VORANOL CP 6001 and minor amounts of adducts principally found in the bottom layer.

### Example 8

The upper layer of Polyol 15, from Example 7, is used to prepare fresh flexible polyurethane foam, Foams 11 to 17 and Comparative Foams D to F. The fresh polyurethane foam is prepared in accordance with the formulation given for Scrap Foam A with varying amounts of the recovered polyol being substituted for the VORANOL CP 6001 content. The substitution amounts and isocyanate index variations are presented in Table VI along with foam properties, as observed.

**Table VI**

| parts by weight | Foam D* | Foam E* | Foam F* | Foam 11 | Foam 12 | Foam 13 | Foam 14 | Foam 15 | Foam 16 | Foam 17 |
|---|---|---|---|---|---|---|---|---|---|---|
| VORANOL CP 6001 (pbw) | 100 | 100 | 100 | 60 | 60 | 60 | 30 | 30 | 30 | 30 |
| Polyol No. 15 (upper layer) pbw | 0 | 0 | 0 | 40 | 40 | 40 | 70 | 70 | 70 | 70 |
| Isocyanate Index | 90 | 100 | 110 | 90 | 100 | 110 | 90 | 100 | 90 | 100 |
| Density kg/m3 | 47 | 46 | 55 | 47 | 46 | 46 | 47 | 44 | 43 | 43 |
| CLD at 40% (Kpa) | 5.1 | 5.8 | 10.6 | 5.1 | 5.7 | 7.6 | 3.0 | 4.3 | 5.1 | 6.1 |
| SAG factor | 3.3 | 3.3 | 3.1 | 2.4 | 2.3 | 2.3 | 2.8 | 2.6 | 2.4 | 2.6 |
| Elongation(%) | 101 | 98 | 105 | 76 | 55 | 68 | 118 | 107 | 83 | 78 |
| Hysteresis (%) | 23 | 23 | 19 | 22 | 24 | 27 | 15 | 18 | 21 | 26 |
| Resilience (%) | 58 | 56 | 50 | 54 | 52 | 51 | 60 | 57 | 56 | 51 |

### Example 9

The lower layer of Polyol 15, Example 7, is used to prepare rigid polyurethane foam. The lower layer has a hydroxyl number of 189 and a viscosity of 2545 cSt at 50°C. The formulations and resulting foam properties, where observed, for Foams 18 to 23 and Comparative Foams G to J are reported in Table VII. The ability to substitute an aromatic-initiated polyol with the recycle polyol is clearly illustrated via the obtention of similar foam physical properties.

The formulation abbreviations featuring in Table VII are further identified as follows:
VORANOL RN 482, a sorbitol-initiated oxypropylene polyether polyol, hydroxyl number 482, available from The Dow Chemical Company;
VORANOL RA640, an ethylene diamine-initiated oxypropylene polyether polyol, hydroxyl number 640, available from The Dow Chemical Company;
Polyol IP 585, an aromatic resin-initiated oxypropylene-oxyethylene polyol with hydroxyl number of 195 and average functionality of 3.3;
NIAX APP 315, an aromatic polyester polyol available from Union Carbide;
TCPP, tris(chlorophenyl)phosphate;
TEP, triethyl phosphate;
DC5357, a proprietary silicon surfactant available from Dow Corning;
DMCHA, N,N-dimethylcyclohexylamine;
CURITHANE 206, a proprietary polyurethane catalyst available from The Dow Chemical Company;
CURITHANE 52, a proprietary polyurethane catalyst available from The Dow Chemical Company;
Refrigerant 141b, dichlorofluoroethane;
VORANATE M220, a crude methylene diphenylisocyanate composition of 31.6 weight percent NCO, available from The Dow Chemical Company.

### Example 10

This examples illustrates the preparation of rigid polyurethane foam using a recycle polyol, Polyol 17 - bottom layer, obtainable from Scrap Foam B.

Polyol 17 is obtained by treating, at 160°C, Scrap Foam B with a liquid mixture consisting of 90 weight percent diethanolamine and 10 weight percent potassium hydroxide in accordance with the general procedure given in Example 1. The weight ratio of scrap foam to liquid mixture is 25:1. The resulting intermediate is then reacted with ethylene oxide in accordance with the general procedure given in Example 2. The amount of ethylene oxide reacted with Intermediate is equivalent to 50 weight percent based on total weight of end, alkoxylation, product. The resulting end product, Polyol 17 on cooling under goes phase separation to give a lighter colored top layer and a darker colored bottom layer. The bottom layer having a hydroxyl number of 213 and a viscosity of 800 cSt at 50°C is used to prepare rigid polyurethane foam. Formulation details and foam properties, where observed, for the resulting foams, Foams 24 and 25 are reported in Table VIII.

**Table VII**

| parts by weight | Foam G* | Foam H* | Foam J* | Foam 18 | Foam 19 | Foam 20 | Foam 21 | Foam 22 | Foam 23 |
|---|---|---|---|---|---|---|---|---|---|
| Recycle polyol | 0 | 0 | 0 | 42.9 | 42.9 | 42.9 | 42.9 | 42.9 | 42.9 |
| VORANOL RN 482 | 17.5 | 17.5 | 17.5 | 17.5 | 17.5 | 17.5 | 27.6 | 27.6 | 27.6 |
| VORANOL RA640 | 10.1 | 10.1 | 10.1 | 10.1 | 10.1 | 10.1 | / | / | / |
| Polyol IP-585 | 42.9 | 42.9 | 42.9 | / | / | / | / | / | / |
| Polyol APP315 | 6 | 6 | 6 | 6 | 6 | 6 | 6 | 6 | 6 |
| Glycerine | 4.7 | 4.7 | 4.7 | 4.7 | 4.7 | 4.7 | 4.7 | 4.7 | 4.7 |
| Water | 1.9 | 1.9 | 1.9 | 1.9 | 1.9 | 1.9 | 1.9 | 1.9 | 1.9 |
| TCPP | 8.3 | 8.3 | 8.3 | 8.3 | 8.3 | 8.3 | 8.3 | 8.3 | 8.3 |
| TEP | 7.2 | 7.2 | 7.2 | 7.2 | 7.2 | 7.2 | 7.2 | 7.2 | 7.2 |
| Surfactant DC5357 | 1.4 | 1.4 | 1.4 | 1.4 | 1.4 | 1.4 | 1.4 | 1.4 | 1.4 |
| DMCHA | 0.8 | 0.8 | 0.8 | 0.8 | 0.8 | 0.8 | 0.8 | 0.8 | 0.8 |
| CURITHANE 206 | 0.5 | 0.5 | 0.5 | 0.5 | 0.5 | 0.5 | 0.5 | 0.5 | 0.5 |
| CURITHANE-52 | 2.0 | 2.0 | 2.0 | 2.0 | 2.0 | 2.0 | 2.0 | 2.0 | 2.0 |
| Refrigerant R-141b | 18 | 18 | 18 | 18 | 18 | 18 | 18 | 18 | 18 |
| VORANATE M220 / Index | 150 | 180 | 210 | 150 | 180 | 210 | 150 | 180 | 210 |
| CT/GT/TFT (secs) | 21/60 /90 | 22/68 /99 | 27/75 /102 | 18/40 /57 | 20/50 /70 | 22/55 /76 | 25/46 /70 | 26/57 /88 | 28/75 /111 |
| Free-rise density (kg/m³) | 27.1 | 30.4 | 32.7 | 30.5 | 29.9 | 34.2 | 29.9 | 31.2 | 34.4 |

| Compressive Strength (kPa): | | | | | | | | | |
|---|---|---|---|---|---|---|---|---|---|
| Parallel-to-rise | 180 | 198 | 236 | 185 | 178 | 259 | 120 | 197 | 243 |
| Perpendicular | 68 | 104 | 119 | 37 | 44 | 116 | 42 | 73 | 88 |

| DIN 4102 B2: | | | | | | | | | |
|---|---|---|---|---|---|---|---|---|---|
| Flame height (cm) | 11 | 11.8 | 11 | 12.8 | 13 | 12.8 | 14 | 12 | 12 |

| Thermal Conductivity (mw/m.K) | | | | | | | | | |
|---|---|---|---|---|---|---|---|---|---|
| Perpendicular: | | | | | | | | | |
| Initial . | 19.5 | 19.8 | 20.1 | 19.1 | 19.8 | 19.4 | 18.9 | 19 | 19 |
| 14 days | 23.9 | 22.5 | 22.6 | 23.2 | 21.9 | 22.3 | 23.6 | 23.1 | 21.7 |

| Parallel-to-rise: | | | | | | | | | |
|---|---|---|---|---|---|---|---|---|---|
| Initial | 22.8 | 22.8 | 23.3 | 22.9 | 23.9 | 23.6 | 23.2 | 23.4 | 22.3 |
| 14 days | 27.1 | 27.6 | 28.2 | 28.6 | 28.9 | 28.1 | 28.8 | 28.2 | 27.2 |

**Table VIII**

| parts by weight | Foam K* | Foam L* | Foam 24 | Foam 25 |
|---|---|---|---|---|
| Recycle polyol | 0 | 0 | 42.9 | 42.9 |
| VORANOL RN 482 | 17.5 | 17.5 | 17.5 | 17.5 |
| VORANOL RA640 | 10.1 | 10.1 | 10.1 | 10.1 |
| Polyol IP-585 | 42.9 | 42.9 | / | / |
| Polyol APP315 | 6 | 6 | 6 | 6 |
| Glycerine | 4.7 | 4.7 | 4.7 | 4.7 |
| Water | 1.9 | 1.9 | 1.9 | 1.9 |
| TCPP | 8.3 | 8.3 | 8.3 | 8.3 |
| TEP | 7.2 | 7.2 | 7.2 | 7.2 |
| Surfactant DC5357 | 1.4 | 1.4 | 1.4 | 1.4 |
| DMCHA | 0.8 | 0.8 | 0.8 | 0.8 |
| CURITHANE 206 | 0.5 | 0.5 | 0.5 | 0.5 |
| CURITHANE-52 | 2.0 | 2.0 | 2.0 | 2.0 |
| Refrigerant R-141b | 18 | 18 | 18 | 18 |
| VORANATE M220 / Index | 180 | 210 | 180 | 210 |
| CT/GT/TFT (secs) | 22/68 /99 | 27/75 /102 | 15/42 /60 | 15/45 /67 |
| Free-rise density (kg/m³) | 30.4 | 32.7 | 30.1 | 33.4 |

| Compressive Strength (kPa): | | | | |
|---|---|---|---|---|
| Parallel-to-rise | 198 | 236 | 232 | 245 |
| Perpendicular | 104 | 119 | 49 | 69 |

| DIN 4102 B2: | | | | |
|---|---|---|---|---|
| Flame height (cm) | 11.8 | 11 | 12.5 | 11 |

| Thermal Conductivity (mw/m.K) | | | | |
|---|---|---|---|---|
| Perpendicular: | | | | |
| Initial | 19.8 | 20.1 | 19.0 | 19.3 |
| 14 days | 22.5 | 22.6 | 20.7 | 21.3 |

| Parallel-to-rise: | | | | |
|---|---|---|---|---|
| Initial | 22.8 | 23.3 | 24.1 | 23.0 |
| 14 days | 27.6 | 28.2 | 28.2 | 27.5 |

## Claims

1. An intermediate product suitable for the preparation of a polyether polyol obtainable by treating polyether polyol-based scrap polyurethane at an elevated temperature with a liquid mixture which consists of an alkanolamine and a metal hydroxide wherein the weight ratio of scrap polyurethane to liquid mixture is from 12:1 to 50:1 and the liquid mixture contains the alkanolamine in an amount of from 70 to 95% based on total weight of the liquid mixture characterized in that the intermediate is a stable emulsion or dispersion.

2. A product according to Claim 1 wherein the alkanolamine is diethanolamine and the metal hydroxide is potassium or sodium hydroxide.

3. A product according to Claims 1 to 2 wherein the weight ratio of scrap polyurethane polymer to liquid mixture is from 15:1 to 30:1.

4. A product according to Claims 1 to 2 wherein the scrap polyurethane polymer is the reaction product of an aromatic polyisocyanate with a polyether polyol which has a molecular weight of from 1000 to 10000.
